# EUROPEAN PATENT APPLICATION

(11) **EP 3 205 782 A1**
(43) Date of publication of application: **16.08.2017**
(21) Application number: 15848782.7
(22) Date of filing: 15.09.2015
(51) Int. Cl.: E03C 1/042, E03C 1/044, F16K 31/44, F16K 31/60

(54) **ROTATING HANDLE AND WATER FAUCET PROVIDED WITH SAME**

(30) Priority: 07.10.2014 JP 2014206577; 08.10.2014 JP 2014207184; 10.10.2014 JP 2014208948
(71) Applicant: Lixil Corporation, Koto-ku Tokyo 136-8535 (JP)
(72) Inventor: FUSEYA, Yuki, Tokyo 136-8535 (JP); SAKATA, Shinya, Tokyo 136-8535 (JP); KAWASE, Masayuki, Tokyo 136-8535 (JP); ANDO, Yoshihiko, Tokyo 136-8535 (JP); YASUMA, Kousuke, Tokyo 136-8535 (JP)
(74) Representative: Algemeen Octrooi- en Merkenbureau B.V.
(86) International application number: PCT/JP2015/076125
(87) International publication number: WO 2016/056357

(57) **Abstract**

A rotary handle 122 is attached to a hot water single faucet 100 and is a handle for controlling water discharge by rotational operation by an operator. A coefficient of friction of a grip member 132 is set large in order to guide fingers of the operator to the grip member 132 (operation surface) installed at a part of an outer surface 134 of the rotary handle 122 when the operator grasps the rotary handle 122. The grip member 132 forms a line-shaped operation surface extending to a position not reaching a joint position of the rotary handle 122 and the hot water single faucet 100 along the outer surface 134 in a direction of an axis of rotation.

## Description

### [Technical Field]

The present invention relates to faucets, and particularly to the structure of the water discharge pipe and rotary handle.

### [BACKGROUND ART]

With most faucets installed in kitchens or the like, water discharge is controlled by a handle. The handles include rotary handles that control the amount of water discharge by how much the handle main body is rotated.

In Patent Document 1, the rotary handle is attached near the water discharge port of the faucet, that is, attached not to the base but to the tip-end part. Such a structure allows the operator to operate manually, and thus lowering the likelihood that water will strike the hand upon operation of the handle. However, because the handle is provided with a lever (grip), unexpected water discharge may occur when a hand, cloth, or dish unintentionally strikes the lever (hereinafter such unintended water discharge is referred to as "erroneous water discharge").

A rotary handle that is operated while grasping the handle itself as illustrated in Patent Document 2 is operated by catching it with the fingers, not by grasping a lever, such that there is no lever-like "projection". Erroneous water discharge is thus unlikely to occur. Meanwhile with such rotary handles, which position is appropriate to be held for operation is not clear, such that an operator may grasp the handle intensely. If an operator intensely grasps the rotary handle, discharged water or splashes may strike the hand of the operator. Also, from a perspective of hygiene it is not preferable to intensely and strongly grasp the rotary handle. When a high temperature is set for the hot water, especially in the case of faucets dedicated to hot water which are often introduced mainly in offices, the faucet main body may be hot. Also from this point, it is desired that the hands of an operator be kept away from the faucet main body by allowing the operator to softly grasp the rotary handle.

### [Related Art]

### [Patent Documents]

Patent Document 1 JP 2001-200559 A
Patent Document 2 Japanese Unexamined Utility Model Publication No. S61-050877
Patent Document 3 Japanese Unexamined Utility Model Publication No. H06-069547
Patent Document 4 Japanese Unexamined Utility Model Publication No. H07-012664

### [DISCLOSURE OF THE INVENTION]

### [Problem to Be Solved by the Invention]

The present inventors find it preferable that a handle includes no "projection" such as a lever in order for the handle and faucet to have simple appearance and to avoid erroneous water discharge. At the same time, it is also important that proper operation by an operator is facilitated with safety.

The present invention has been devised in consideration to the above issues. The main object of the present invention is to propose a new rotary handle where a balance among design, operability, and safety is considered.

### [Means to Solve the Problem]

A rotary handle of an aspect of the present invention is attached to a faucet and is a handle for controlling water discharge by rotational operation by an operator.

A coefficient of friction of an operation surface formed at a part of an outer surface of the handle is set greater than a coefficient of friction in other regions of the outer surface.

### [Effects of the Invention]

The present invention allows for providing a new rotary handle where a balance among design, operability, and safety is considered.

### [BRIEF DESCRIPTION OF THE DRAWINGS]

Fig. 1 is a perspective view of a kitchen installed in an office kitchenette room in a first embodiment.
Fig. 2 is a perspective view of appearance of a hot water single faucet of the first embodiment.
Fig. 3 is a cross-sectional side view of the hot water single faucet of the first embodiment.
Fig. 4 is an enlarged cross-sectional side view of a water discharge part and its vicinity in the hot water single faucet of the first embodiment.
Fig. 5 is a diagram illustrating an inner structure of a rotary handle of the first embodiment.
Fig. 6 is a front view and a side view of the rotary handle of the first embodiment.
Fig. 7 is a schematic diagram for explaining the length of the finger cushion of the index finger in the first embodiment.
Fig. 8 is a perspective view of a kitchen installed in an office kitchenette room in a second embodiment.
Fig. 9 is a perspective view of appearance of a hot water single faucet of the second embodiment.
Fig. 10 is a cross-sectional side view of the hot water single faucet of the second embodiment.
Fig. 11 is an enlarged cross-sectional side view of a water discharge part and its vicinity in the hot water single faucet of the second embodiment.
Fig. 12 is a cross-sectional side view of a general rotary handle.
Fig. 13 is an enlarged schematic diagram of a groove and its vicinity of the second embodiment.
Fig. 14A is a first schematic diagram illustrating a variation of a connection structure of a rotary handle and a water discharge pipe with respect to the second embodiment.
Fig. 14B is a second schematic diagram illustrating a variation of a connection structure of a rotary handle and a water discharge pipe with respect to the second embodiment.
Fig. 15 is a perspective view of a kitchen installed in an office kitchenette room in a third embodiment.
Fig. 16 is a perspective view of appearance of a hot water single faucet of the third embodiment.
Fig. 17 is a cross-sectional side view of the hot water single faucet of the third embodiment.
Fig. 18 is an enlarged cross-sectional side view of a water discharge part and its vicinity in the hot water single faucet of the third embodiment.
Fig. 19 is a perspective view of appearance of a straightener cap of the third embodiment.
Fig. 20 is an enlarged cross-sectional side view of the water discharge part of the third embodiment.

### [MODE FOR CARRYING OUT THE INVENTION]

### [First Embodiment]

In a first embodiment, a point which will be mainly described is, in a rotary handle attached to a tip portion of a faucet (especially a hot water single faucet), to simplify design by providing a grip to a part of the rotary handle.

An overview of the first embodiment will be described.

A rotary handle of an aspect of the present invention is attached to a faucet and is a handle for controlling water discharge by rotational operation by an operator.

In this handle, a coefficient of friction of an operation surface formed at a part of an outer surface of the handle is set greater than a coefficient of friction of other regions of the outer surface.

Since an "operation surface" along the outer surface of the handle is formed without providing a "projection" such as a lever to the rotary handle, a likelihood that erroneous water discharge occurs due to unintentional contact of a hand, a dish, or other items with the lever is likely to be lowered. Moreover, since there is no projection part such as a lever, the overall appearance of the faucet is likely to be simplified. Since the operation surface has a greater coefficient of friction than those of other regions on the outer surface, it is easy for an operator to intuitively recognize where the operation surface is, in other words, where to and how to place fingers due to a difference in touches. Thus, it is likely that the operator is naturally guided to properly grasp the rotary handle.

The operation surface may be formed as a line-shaped surface extending along the outer surface in a direction of an axis of rotation.

Such an aspect of the invention allows a position of the line-shaped operation surface to represent a rotation angle of the rotary handle and thus the operator can easily visually recognize a state of water discharge from the position of the operation surface. That is, the line-shaped operation surface can also function as an indicator.

The operation surface may extend to a position, on the outer surface, which does not reach a joint position of the handle and the faucet.

Such an aspect of the invention allows the operator to easily visually recognize that there is no need to grasp the rotary handle so intensely as to touch the faucet. Therefore, a likelihood that fingers of the operator touch the faucet main body or the water discharge port is further likely to be lowered.

The operation surface may be formed in an operation member assemble to the handle. The operation member may extend to an upper end surface of the handle.

Such an aspect of the invention allows the operation surface formed at a part of the upper end surface to represent a rotation angle of the rotary handle and thus the operator can easily visually recognize a state of water discharge also from the upper end surface side. That is, the operation surface facilitates provision of visual recognition as an indicator also on the upper end surface. Furthermore, presenting a notice or an instruction to an operator at a part formed on the upper end surface allows the operator to further surely recognize an operation method that is safer and more proper.

A plurality of protrusions may be arrayed on the operation surface in order to raise the coefficient of friction.

According to such an aspect of the invention, raising the coefficient of friction of the operation surface is not only likely to enhance operability but also facilitates the operator to tactually recognize where to place fingers and how much force to be applied due to distinct touch provided by the protrusions to the fingers touching the operation surface. Providing the protrusions also facilitates visually recognizing a place of the operation surface.

A faucet according to an aspect of the present invention includes a water discharge pipe, a tip portion of which is terminated, and formed with a water discharge port on a side surface thereof. The rotary handle described above may be further installed at the tip portion of the water discharge pipe. According to such an aspect, it is unlikely that water strikes a hand of the operator upon operation of the handle since the handle is positioned on the tip side with respect to the water discharge port of the faucet.

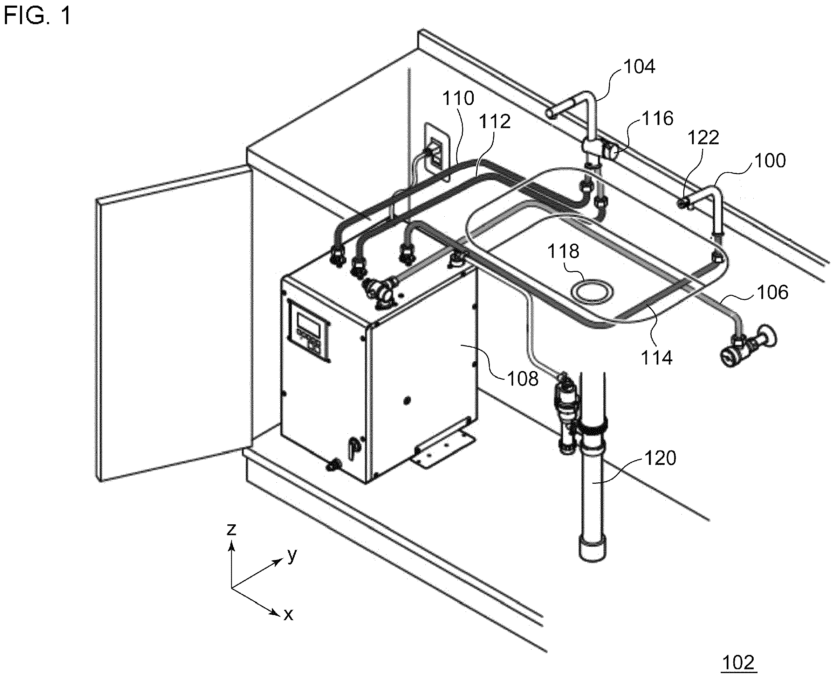

Fig. 1 is a perspective view of a kitchen 102 installed in an office kitchenette room in the first embodiment.

The kitchen 102 includes a hot water single faucet 100 and a mixing faucet 104. The hot water single faucet 100 is dedicated to hot water of 95 degrees at the maximum. The mixing faucet 104 is capable of adjusting the temperature up to approximately 60 degrees at the maximum. The hot water single faucet 100 is capable of immediately supplying hot water for making tea or coffee.

Water supplied from a first water supply pipe 106 is once supplied to an electric water heater 108. The electric water heater 108 heats the supplied water and produces hot water. A second water supply pipe 110 of the electric water heater 108 supplies hot water and a third water supply pipe 112 supplies cold water to the mixing faucet 104. Operating a lever handle 116 attached to a base of the mixing faucet 104 allows for adjusting the amount of water discharge and the temperature (mixture ratio of hot water and cold water). Water discharged from the mixing faucet 104 is drained from a drainage pipe 120 via a drainage port 118.

Meanwhile, a fourth water supply pipe 114 of the electric water heater 108 supplies hot water to the hot water single faucet 100. Operating the rotary handle 122 attached to a tip of the hot water single faucet 100 allows for adjusting the amount of water discharge. The hot water single faucet 100 is not capable of adjusting the temperature of discharged water. Hot water discharged from the hot water single faucet 100 is also drained from the drainage pipe 120 via the drainage port 118.

Hereinafter, the hot water single faucet 100 and the rotary handle 122 attached thereto will be mainly described in the first embodiment.

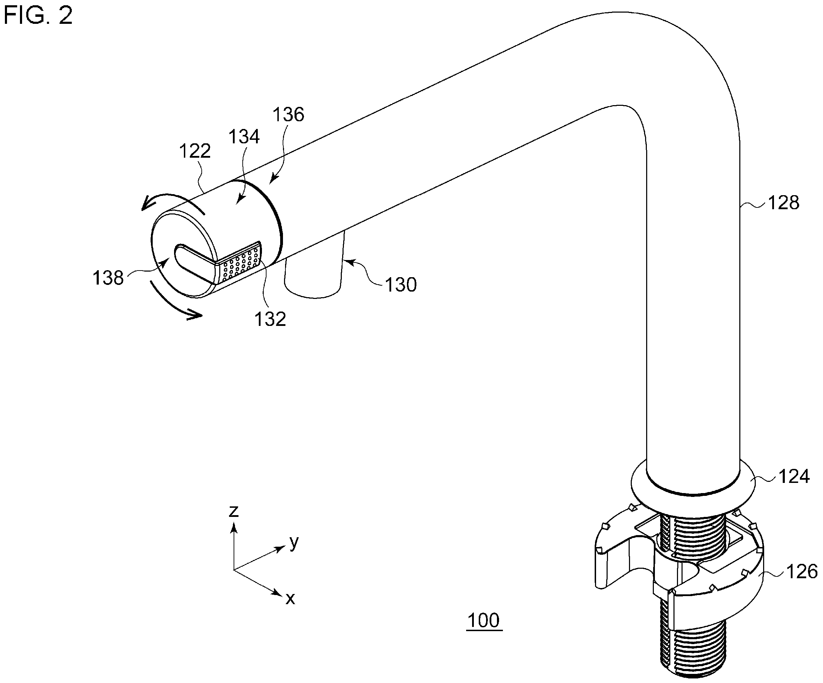

Fig. 2 is a perspective view of appearance of the hot water single faucet 100 of the first embodiment.

The hot water single faucet 100 is fixed to the kitchen 102 by a pedestal 124 and a washer 126. A water discharge pipe 128 is rotatable at the pedestal 124 about a z axis, as an axis of rotation, by approximately 150 degrees. In the water discharge pipe 128, a hose (described later) not illustrated is inserted. This hose is connected to the fourth water supply pipe 114 via the pedestal 124 and a connector 148 (not illustrated in Fig. 2) (described later). A space between the hose and the water discharge pipe 128 forms a heat insulating layer and thus thermal energy of hot water passing through the hose is difficult to be transferred to the water discharge pipe 128. Details will be described later.

The water discharge pipe 128 extends in the z axis direction (vertical direction) and thereafter is bent in a y axis direction to form an L-letter shape, and a water discharge part 130 is formed on a side surface of the tip thereof. To the tip of the water discharge pipe 128, the rotary handle 122 is attached. Since the rotary handle 122 is installed not to the base side of the water discharge pipe 128 but to the tip side thereof, an operator can operate the hot water single faucet 100 positioned closer to the body than the water discharge part 130 without reaching a hand closer to the pedestal 124. This allows for a safe structure where hot water discharged from the water discharge part 130 or its splashes or steam is unlikely to strike the hand.

An outer surface 134 of the rotary handle 122 and the outer surface 134 of the water discharge pipe 128 continue in a flat manner (flush). Therefore, the rotary handle 122 has a simple design where the water discharge pipe 128 is integrated.

An operator places a finger to the grip member 132 attached to the rotary handle 122 and rotates the rotary handle 122 about the y axis. The grip member 132 is an L-letter shaped member that extends in a line shape on the outer surface 134 of the rotary handle 122 and is also formed at a part of an upper end surface 138 (details will be described later). As illustrated in Fig. 2, when the grip member 132 is in a horizontal position, water is stopped. Rotating the rotary handle 122 therefrom initiates water discharge and gradually increases a flow rate. Rotating by approximately 90 degrees to place the grip member 132 in a vertical position results in a state where water is fully discharged.

It is preferable that the color of the water discharge pipe 128 and the rotary handle 122 is the same or similar. In the first embodiment, the water discharge pipe 128 and the rotary handle 122 are formed of metal such as brass or zinc. Meanwhile the grip member 132 is a red resin member where the plurality of protrusions are arrayed on a surface thereof and forms the "operation surface". Note that the operation surface may be formed not by a separate body such as the grip member 132 but by processing a part of the outer surface 134.

A most distinct difference between the outer surface 134 of the rotary handle 122 and the operation surface (grip member 132) formed on the outer surface 134 is a difference in difficulty of being slipped (coefficient of friction). In the first embodiment, the coefficient of friction of the grip member 132 is raised by arraying the plurality of protrusions on the surface of the grip member 132. An operator can intuitively recognize a place to be operated in the rotary handle 122, that is, a place or a range of the operation surface from the touch and the vision. Therefore, the operator can intuitively understand that there is no need to intensely grasp the entire rotary handle 122 and that the rotary handle 122 can be operated by softly placing a finger to and thereby holding the grip member 132. In this manner, forming the operation surface that is easy to be recognized by the touch, preferably also by the vision, along the outer surface 134 allows for naturally guiding a finger of the operator to the operation surface.

The grip member 132 is formed along the outer surface 134 and thus there is almost no likelihood of erroneous water discharge even when something strikes the rotary handle 122. The hot water single faucet 100 of the first embodiment has a simple design as well as a structure facilitating safety and operability.

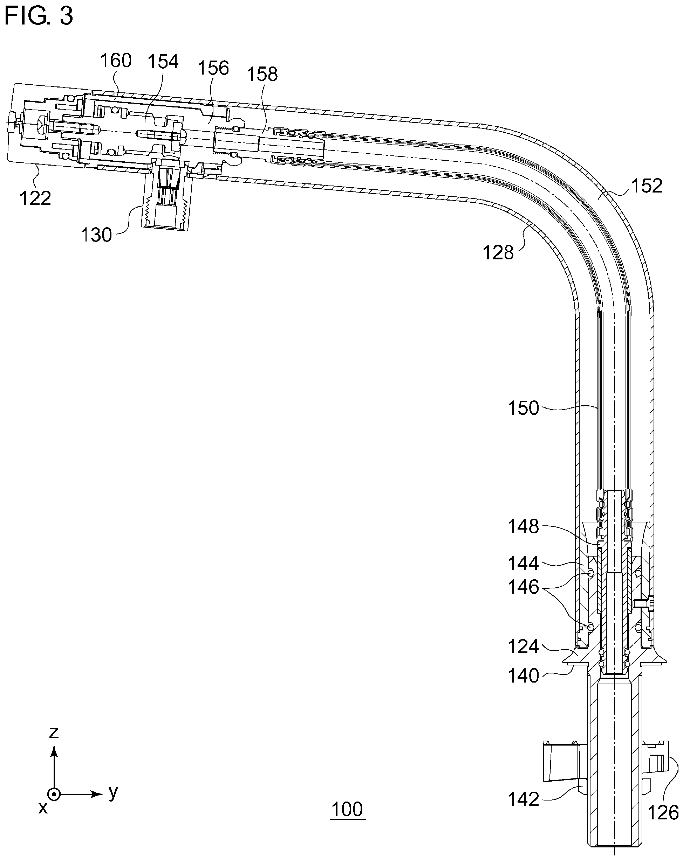

Fig. 3 is a cross-sectional side view of the hot water single faucet 100 of the first embodiment.

The pedestal 124 of the hot water single faucet 100 is inserted in an installing surface of the kitchen 102 via a packing 140 and is fixed by the washer 126 and a fastening nut 142. An upper part of the pedestal 124 is inserted in a rotary socket 144. The pedestal 124 and the rotary socket 144 are further held by two O rings 146. The fourth water supply pipe 114 is connected to a hose 150 via the pedestal 124 and the connector 148. The hose 150 is bent along the water discharge pipe 128. Hot water supplied from the fourth water supply pipe 114 passes through the hose 150. An air layer 152 formed between the water discharge pipe 128 and the hose 150 forms a heat insulating layer and thus thermal energy of the hose 150 is difficult to be transferred to the water discharge pipe 128. Such a structure suppresses a temperature rise of the water discharge pipe 128.

The hose 150 is connected to a fixing member 156 via a connector 158. The fixing member 156 is fixed to the water discharge pipe 128 via a covering member 160. An outlet of the hose 150 is closed by a spindle 154. Rotating the rotary handle 122 results in movement of the spindle 154 in a negative y axis direction and opens the outlet of the hose 150. This results in discharging hot water in the hose 150 from the water discharge part 130.

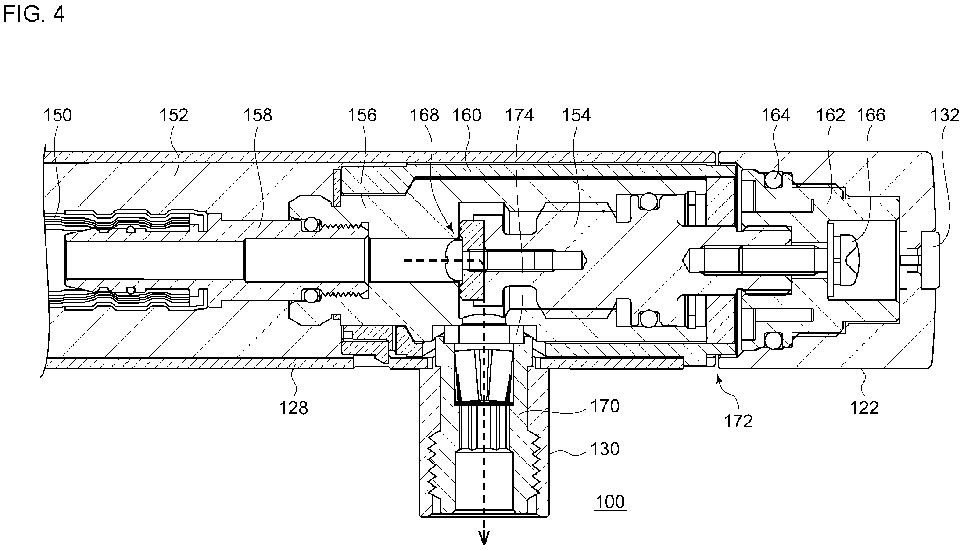

Fig. 4 is an enlarged cross-sectional side view of the water discharge part 130 and its vicinity in the hot water single faucet 100 of the first embodiment.

The hose 150 is connected to the fixing member 156 via the connector 158. Hot water flows into the fixing member 156 from the hose 150 and thus the fixing member 156 tends to be also hot. The fixing member 156 is fitted into the water discharge pipe 128 via the covering member 160 made of resin. The covering member 160 is a heat insulating material that suppresses the heat of the fixing member 156 to be transferred to the water discharge pipe 128 and also plays a role to fix the fixing member 156 to the water discharge pipe 128.

Inside the rotary handle 122 a handle main body part 162 is installed via an O ring 164. The handle main body part 162 is connected to the spindle 154 by a fixing screw 166. When water is stopped, an outlet 168 of the hose 150 is closed by the spindle 154. Rotating the rotary handle 122 results in movement of the spindle 154 in a rightward direction on the paper surface in Fig. 4 and opens the outlet 168, thereby allowing the hose 150 and the water discharge part 130 to be communicated. When the outlet 168 opens, hot water having flowed into the hose 150 flows into the water discharge part 130 via the outlet 168, passes through a straightener cap 170 inside the water discharge part 130, and then is discharged downward on the paper surface in Fig. 4.

A joint part of the water discharge pipe 128 and the rotary handle 122 includes a slight groove 172. When the rotary handle 122 is rotated and the rotary handle 122 parallely moves, the width of the groove 172 is widened. When the groove 172 is deep, the groove 172 stands out especially upon discharging water. This is not preferable in appearance. Moreover, when the groove 172 is wide and deep, steam easily enters from the groove 172. Steam having entered the rotary handle 122 or the water discharge pipe 128 is gradually cooled to become droplets and may drop from the groove 172 as droplets. As described above, it is desirable that the groove 172 is as small and especially shallow as possible from the perspectives of appearance and hygiene.

In the first embodiment, therefore, the covering member 160 slightly protrudes from the water discharge pipe 128. An outer surface of this protruding covering member 160 is disposed along an inner surface of the rotary handle 122. It is ideal that a gap between the covering member 160 and the rotary handle 122 equals zero. It is preferable that the space is at least 0.5 millimeters or less, and more preferably 0.25 millimeters or less in the structure. In this manner, the groove 172 in the joint part of the water discharge pipe 128 and the rotary handle 122 is allowed to be shallow by allowing the covering member 160 to slightly protrude from the water discharge pipe 128 and allowing the inner surface of the rotary handle 122 to be disposed along the outer surface of the protruding part of the covering member 160.

As described above, the covering member 160 is not only a heat insulating material but also plays the role of stabilizing the fixing member 156 in the water discharge pipe 128. In the first embodiment, the rotary handle 122 and the spindle 154 connected thereto are inserted in the fixing member 156 and thus, when the fixing member 156 is not stably fixed, the rotary handle 122 disadvantageously becomes unstable. Meanwhile, when the covering member 160 is pierced with a screw from outside the water discharge pipe 128 for stabilizing the covering member 160 or the fixing member 156, the screw is visible outside the water discharge pipe 128. This is not preferable in appearance. In order to firmly fix the covering member 160 and the water discharge pipe 128, it is required that screws are provided to a plurality of positions.

In the first embodiment, therefore, the fixing member 156 and the covering member 160 are fixed to the water discharge pipe 128 by screwing the straightener cap 170 into the water discharge part 130 and allowing the straightener cap 170 to press the fixing member 156 and the covering member 160 against the water discharge pipe 128 via a packing 174. The straightener member is a essential component for straightening discharged water. In the first embodiment, the straightener cap 170 as the straightener member to be inserted in the water discharge part 130 like a screw also plays a role to stabilize the fixing member 156 or the covering member 160.

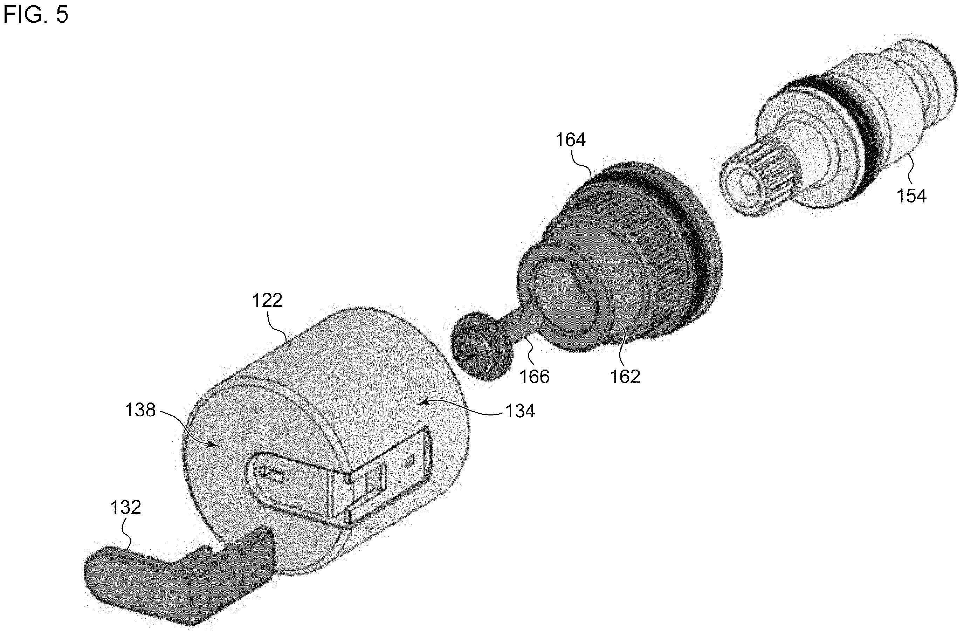

Fig. 5 is a diagram illustrating an inner structure of the rotary handle 122 of the first embodiment.

The grip member 132 is an L-letter shaped member fitted along the outer surface 134 and the upper end surface 138 of the rotary handle 122. The grip member 132 is made of resin, and a coefficient of friction thereof is raised by arraying the plurality of protrusions on a surface thereof. These protrusions also visually represents that the grip member 132 is the place to place a finger (operation surface).

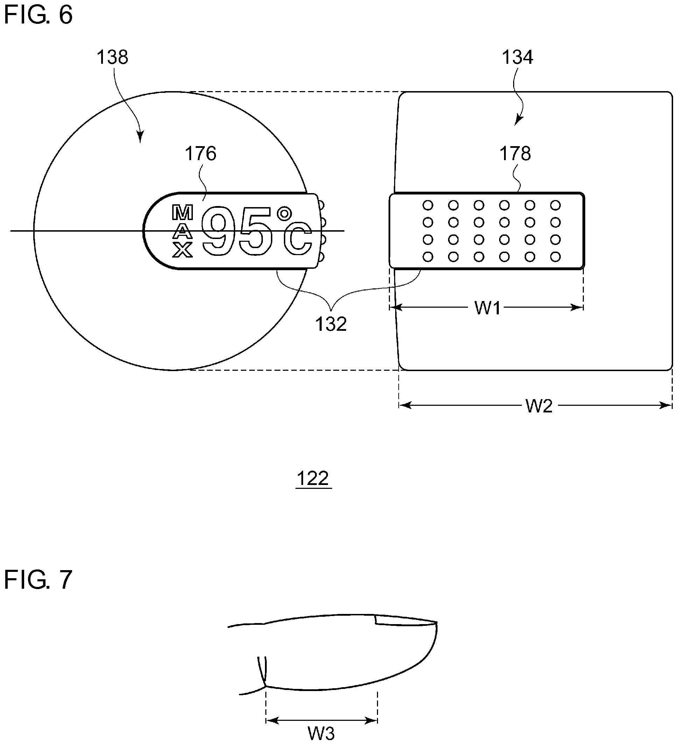

Fig. 6 is a front view and a side view of the rotary handle 122 of the first embodiment.

An upper surface portion 176, out of the grip member 132, installed at the upper end surface 138 of the rotary handle 122 extends to the center of the upper end surface 138. The upper surface portion 176 represents a state where water is stopped when directed in a horizontal direction as illustrated in Fig. 6 and represents a state where water is fully discharged when directed in a vertical direction rotated to the left by 90 degrees. In this manner, whether water is discharged or stopped is represented by a direction of the upper surface portion 176 of a line shape and thus the upper surface portion 176 functions as an indicator. The upper surface portion 176 further shows a caution "MAX 95 °C" to attract attention of an operator. Not limited to a caution, the upper surface portion 176 may show various descriptions on operation thereof. Examples include description showing a rotation direction of the rotary handle 122 or instruction requesting to place a finger on a side surface portion 178 of the grip member 132.

The side surface portion 178, out of the grip member 132, installed at the outer surface 134 of the rotary handle 122 extends along a direction of rotation axis of the rotary handle 122. The side surface portion 178 functions as the operation surface as well as an indicator.

A surface of the side surface portion 178 includes an array of the plurality of protrusions as described above. This allows an operator to intuitively recognize that the side surface portion 178 of the grip member 132 is the place to place a finger in the rotary handle 122 from the touch and the vision.

When the length of the outer surface 134 of the rotary handle 122 is denoted as W2, the length W1 of the side surface portion 178 is smaller than W2. That is, the outer surface 134 of the grip member 132 forms a line-shaped region having a length not reaching to the position where the rotary handle 122 and the hot water single faucet 100 are joined together. Although the heat insulating layers including the air layer 152 and the covering member 160 are provided to avoid over-heating of the water discharge pipe 128, it is still desirable to avoid as much as possible that an operator touches the water discharge pipe 128. Especially it is desirable that fingers of an operator are kept away from the water discharge part 130 as much as possible. Therefore, by setting W1 < W2, an operator is avoided from intensely grasping the rotary handle 122 and touching the water discharge pipe 128 or the water discharge part 130.

More specifically, it is preferable that W1 is more than or equal to a half of W2 and less than three-fourths of W2. According to a survey by the present inventors, the size W3 of a part corresponding to the finger cushion of the distal phalanx of the index finger or the thumb of an adult (see Fig. 7) is distributed between approximately 20 to 25 millimeters. Therefore, W1 is preferably more than or equal to 20 millimeters and less than 30 millimeters considering not only safety but also operability.

A coefficient of friction of the grip member 132 may be raised by the protrusions as illustrated in Fig. 6 or may be raised by entire emboss processing. Alternatively, a coefficient of friction may be raised by employing a material having a greater coefficient of friction than that of the main body of the rotary handle 122 such as an elastic body including rubber or synthetic resin having a rough surface. The operation surface may be formed by separately attaching the grip member 132 which is L-letter shaped along the outer surface 134 and the upper end surface 138 of the rotary handle 122 as in the first embodiment. Alternatively, an operation surface (region for operation) having a great coefficient of friction may be formed on an outer surface 134 itself of the rotary handle 122 by subjecting a part of the outer surface 134 of the rotary handle 122 to emboss processing. Alternatively, an operation surface having a great coefficient of friction may be formed by attaching a sticker member such as a plastic film to the outer surface 134. In either way, it is only required to form, at a part of the outer surface 134 of the rotary handle 122, a region having a coefficient of friction greater than those of other parts as an operation surface.

The hot water single faucet 100 and especially the rotary handle 122 have been mainly described based on the first embodiment.

First, the rotary handle 122 is attached not to the base but to the tip portion of the hot water single faucet 100. This enhances operability and allows for lowering a likelihood that hot water discharged from the water discharge part 130 strikes a hand. The rotary handle 122 is positioned closer to the body and higher than the water discharge port. This arrangement avoids water from striking a hand upon operation of the handle. Moreover, the outer surface 134 of the rotary handle 122 and the outer surface 136 of the water discharge pipe 128 continue in a flat manner and thus a simple design where the rotary handle 122 is integrated to the hot water single faucet 100 in appearance can be implemented.

Forming the operation surface by the grip member 132 recognizable by the color and the shape allows fingers of an operator to be naturally guided to the operation surface. In other words, a likelihood that an operator grasps a part other than the operation surface can be reduced as much as possible. An operator can intuitively understand from the size and the shape of the grip member 132 that the rotary handle 122 can be operated only by softly pinching the rotary handle 122. Moreover, a rotation angle of the rotary handle 122 is made clear by an inclination of the grip member 132 and thus whether water is stopped or discharged can be visually recognized from the inclination of the grip member 132.

The rotary handle 122 includes no "projection" such as a lever and thus erroneous water discharge is unlikely to occur. The side surface portion 178 of the grip member 132 installed along the outer surface 134 has a size where the finger cushion of the distal phalanx of the index finger or the thumb can be placed. Therefore, a size sufficient for applying force with a finger is ensured. Such a configuration lowers a likelihood as much as possible that a finger of an operator touches the water discharge pipe 128 while maintaining operability. Furthermore, the air layer 152 and the covering member 160 implements a structure where thermal energy of hot water passing through the hose 150 is difficult to be transferred to the water discharge pipe 128.

In this manner, forming the operation surface of a size sufficient for transferring force of the index finger or the thumb to the rotary handle 122 while an operator is tactually and visually guided to a correct operation method allows for implementing both operability and safety. Not forming a projection such as a lever but forming the operation surface having a great coefficient of friction along the outer surface 134 of the rotary handle 122 allows for simplifying an overall design while sufficient grip force is ensured.

The hot water single faucet 100 has been described in the first embodiment; however, the rotary handle 122 in the first embodiment is also applicable to mixing faucets with two handles or to cold water faucets. Moreover, a position of a handle may not be in a tip of a faucet but may be near a base of the faucet. The rotary handle 122 is also applicable to handles attached to a faucet while interposing a cover or a counter. The rotary handle 122 is applicable not only to faucets for kitchens but also to faucets for bathrooms or wash cabinets.

### [Second Embodiment]

In a second embodiment, a point which will be mainly described is, in a rotary handle attached to a tip portion of a faucet (especially a hot water single faucet), to shallow a "groove" formed in a joint position between a handle and a faucet main body.

Most of faucets installed in a kitchen or the like are controlled of water discharge by a handle. Handles include rotary handles that control the amount of water discharge by the rotation quantity of the handle main body.

Rotary handles include those attached with a spindle that functions as a "plug" of a faucet main body and the spindle linearly moves when the handle is rotated. For example in the rotary handle described in patent document 3, a spindle 24 is inserted in a cylindrical part 20 protruding from a faucet main body 10.

In the case of the rotary handle of the patent document 3, there is a relatively large gap between a handle 34 and the cylindrical part 20. When such a rotary handle is attached horizontally, the gap formed between the handle 34 and the cylindrical part 20 may particularly stand out. The present inventors perceived that there is a need to make such a gap inconspicuous in order to make design of a faucet including a rotary handle sophisticated.

In the second embodiment, a structure for making a gap formed at a joint part of a rotary handle and a faucet main body inconspicuous is proposed.

An overview of the second embodiment will be described.

A faucet of an aspect of the present invention includes a main body part and a rotary handle attached to the main body part for controlling water discharge by rotational operation by an operator.

An inner side of an outer shell of one of the main body part and the rotary handle is provided with a protruding part protruding by a predetermined length from the outer shell and an outer shell of the other one of the main body part and the rotary handle is formed along an outer surface of the protruding part.

A gap (groove) is formed at a joint part between the main body part and the rotary handle. Such a gap may deteriorate integral appearance of the main body part and the rotary handle. Therefore for example, the protruding part protruding by a predetermined length from the inner side of the outer shell of the main body part is provided, thereby making the groove shallow by the outer shell of the rotary handle formed along the protruding part. This results in making the groove inconspicuous. The shallow groove is preferable also from the perspective of hygiene since it becomes difficult for a foreign matter or steam to enter from the groove. This is similar also in the case of providing the protruding part to the inner side of the outer shell of the rotary handle and not of the main body part.

Outer surfaces of the main body part and the rotary handle may be constituted to be in a flat manner.

Allowing the outer surfaces of the main body part and the rotary handle to be in a flat manner (flush) enhances integral appearance of the main body part and the rotary handle.

The main body part may include a functional component for controlling water discharge and a covering member that covers the functional component. A protruding part may be formed by allowing the covering member to protrude by a predetermined length from the inner side of the outer shell of the main body part.

By allowing the covering member that protects the functional component to slightly protrude, it becomes easy to form the protruding part.

The covering member may fix the functional component to the main body part and function as a heat insulating member interposed between the functional component and the main body part.

Allowing the covering member not only to function as the protruding part but also to have a fixing function and a heat insulating function facilitates effectively utilizing an inner space of the main body part.

The "predetermined length" of the protruding part may be set larger than the maximum width of the groove formed between the main body part and the rotary handle.

The width of the gap (groove) between the main body part and the rotary handle increases or decreases due to movement of the rotary handle. Since a bottom part of the groove can be covered by the protruding part even when the groove width is maximized according to such an aspect, internal shielding by the protruding part can be approximated to perfection.

According to the respective structures as described above, a faucet apparatus in which the gap at the joint part of the rotary handle and the faucet main body is inconspicuous can be provided.

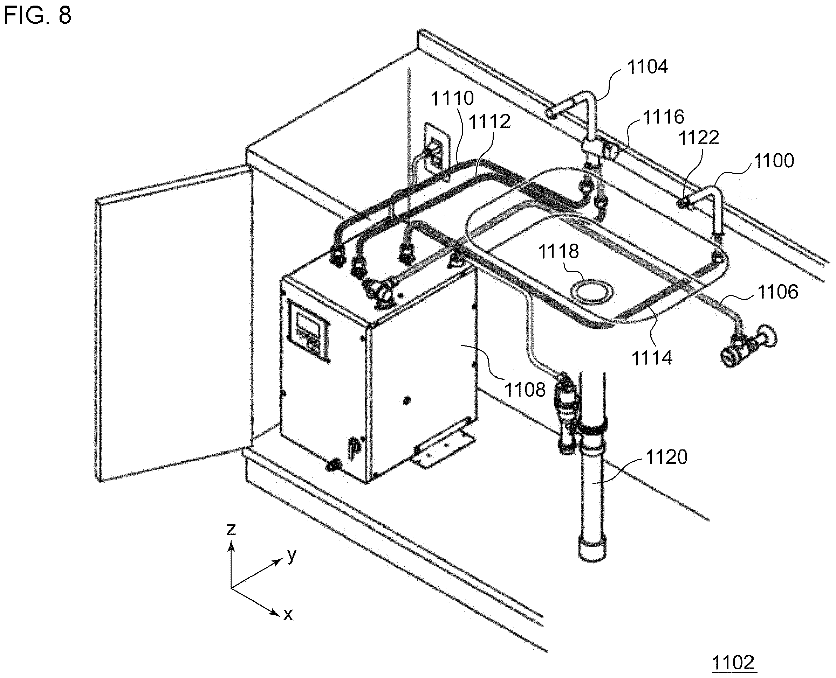

Fig. 8 is a perspective view of a kitchen 1102 installed in an office kitchenette room in the second embodiment.

The kitchen 1102 includes a hot water single faucet 1100 and a mixing faucet 1104. The hot water single faucet 1100 is dedicated to hot water of 95 degrees at the maximum. The mixing faucet 1104 is capable of adjusting the temperature up to approximately 60 degrees at the maximum. The hot water single faucet 1100 is capable of immediately supplying hot water for making tea or coffee.

Water supplied from a first water supply pipe 1106 is once supplied to an electric water heater 1108. The electric water heater 1108 heats the supplied water and produces hot water. A second water supply pipe 1110 of the electric water heater 1108 supplies hot water and a third water supply pipe 1112 supplies cold water to the mixing faucet 1104. Operating a lever handle 1116 attached to a base of the mixing faucet 1104 allows for adjusting the amount of water discharge and the temperature (mixture ratio of hot water and cold water). Water discharged from the mixing faucet 1104 is drained from a drainage pipe 1120 via a drainage port 1118.

Meanwhile, a fourth water supply pipe 1114 of the electric water heater 1108 supplies hot water to the hot water single faucet 1100. Operating the rotary handle 1122 attached to a tip of the hot water single faucet 1100 allows for adjusting the amount of water discharge. The hot water single faucet 1100 is not capable of adjusting the temperature of discharged water. Hot water discharged from the hot water single faucet 1100 is also drained from the drainage pipe 1120 via the drainage port 1118.

Hereinafter, the hot water single faucet 1100 and the rotary handle 1122 attached thereto will be mainly described in the second embodiment.

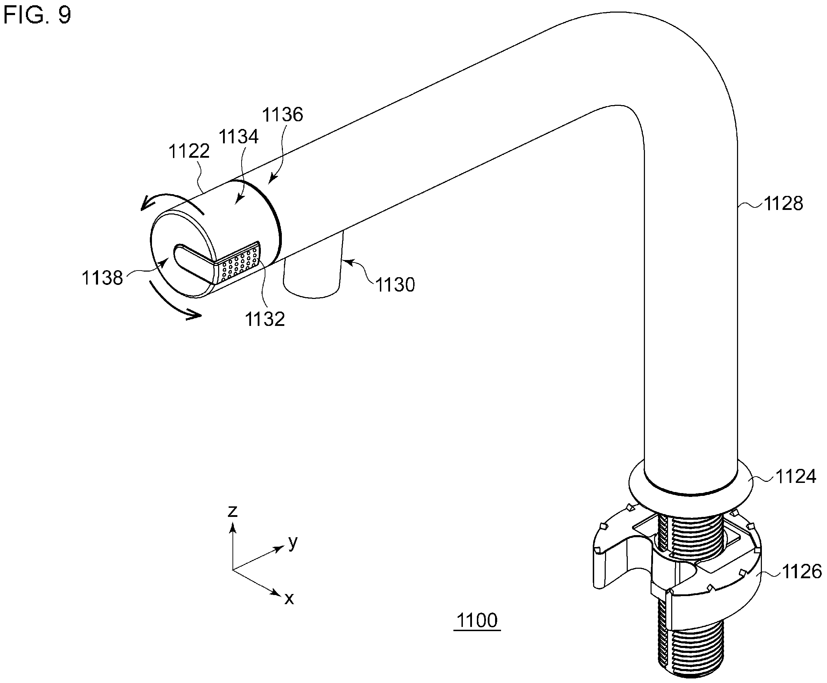

Fig. 9 is a perspective view of appearance of the hot water single faucet 1100 of the second embodiment.

The hot water single faucet 1100 is fixed to the kitchen 1102 by a pedestal 1124 and a washer 1126. A water discharge pipe 1128 is rotatable in the pedestal 1124 about a z axis, which is an axis of rotation, by approximately 150 degrees. In the water discharge pipe 1128, a hose (described later) not illustrated is inserted. This hose is connected to the fourth water supply pipe 1114 via the pedestal 1124 and a connector 1148 (not illustrated in Fig. 9) (described later). A space between the hose and the water discharge pipe 1128 forms a heat insulating layer and thus thermal energy of hot water passing through the hose is difficult to be transferred to the water discharge pipe 1128. Details will be described later.

The water discharge pipe 1128 extends in the z axis direction (vertical direction) and thereafter is bent in a y axis direction to form an L-letter shape. A water discharge part 1130 is formed on a side surface of a tip thereof. To the tip of the water discharge pipe 1128,the rotary handle 1122 is attached. Since the rotary handle 1122 is installed not to the base side of the water discharge pipe 1128 but to the tip side thereof, an operator can operate the hot water single faucet 1100 positioned closer to the body than the water discharge part 1130 without reaching a hand closer to the pedestal 1124. This allows for a safe structure where hot water discharged from the water discharge part 1130 or its splashes or evaporation are unlikely to strike the hand.

An outer surface 1134 of the rotary handle 1122 and the outer surface 1134 of the water discharge pipe 1128 continue in a flat manner (flush). Therefore, the rotary handle 1122 has a simple design where the water discharge pipe 1128 is integrated.

An operator places a finger to the grip member 1132 attached to the rotary handle 1122 and rotates the rotary handle 1122 about the y axis. The grip member 1132 is an L-letter shaped member that extends in a line shape on the outer surface 1134 of the rotary handle 1122 and is also formed at a part of an upper end surface 138. As illustrated in Fig. 9, when the grip member 1132 is in a horizontal position, water is stopped. Rotating the rotary handle 1122 therefrom initiates water discharge and gradually increases a flow rate. Rotating by approximately 90 degrees to place the grip member 1132 in a vertical position results in a state where water is fully discharged.

It is preferable that the color of the water discharge pipe 1128 and the rotary handle 1122 is the same or similar. In the second embodiment, the water discharge pipe 1128 and the rotary handle 1122 are formed of metal such as brass or zinc. Meanwhile the grip member 1132 is a red resin member where a plurality of protrusions are arrayed on a surface thereof and forms an "operation surface". Note that the operation surface may be formed not by a separate body such as the grip member 1132 but by processing a part of the outer surface 1134.

A most distinct difference between the outer surface 1134 of the rotary handle 1122 and the operation surface (grip member 1132) formed on the outer surface 1134 is a difference in difficulty of being slipped (coefficient of friction). In the second embodiment, the coefficient of friction of the grip member 1132 is raised by arraying the plurality of protrusions on the surface of the grip member 1132. An operator can intuitively recognize a place to be operated in the rotary handle 1122, that is, a place or a range of the operation surface from the touch and the vision. Therefore, the operator can intuitively understand that there is no need to intensely grasp the entire rotary handle 1122 and that the rotary handle 1122 can be operated by softly placing a finger to and thereby holding the grip member 1132. In this manner, forming the operation surface that is easy to be recognized by the touch, preferably also by the vision, along the outer surface 1134 allows for naturally guiding a finger of the operator to the operation surface.

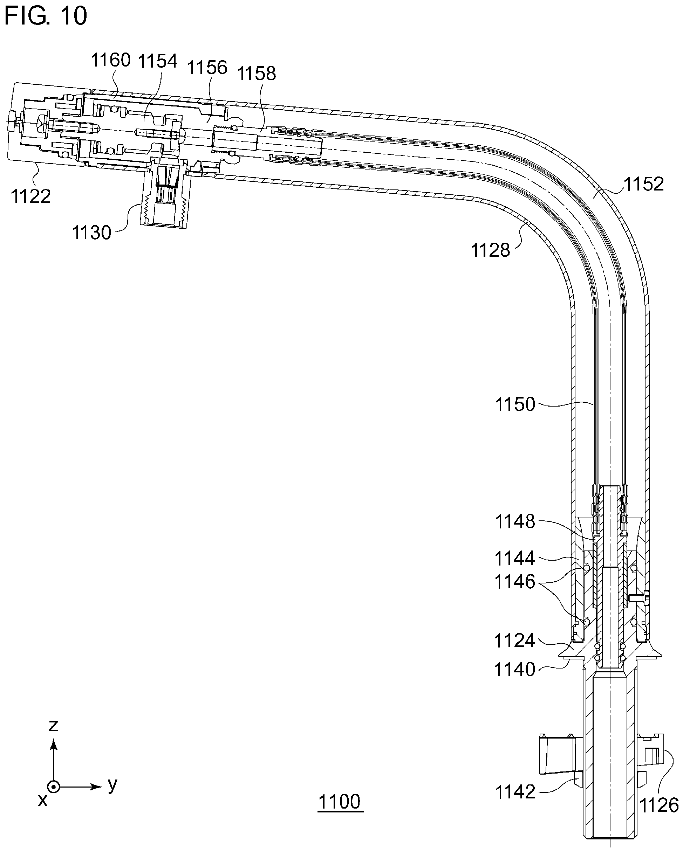

Fig. 10 is a cross-sectional side view of the hot water single faucet 1100 of the second embodiment.

The pedestal 1124 of the hot water single faucet 1100 is inserted in an installing surface of the kitchen 1102 via a packing 1140 and is fixed by the washer 1126 and a fastening nut 1142. An upper part of the pedestal 1124 is inserted in a rotary socket 1144. The pedestal 1124 and the rotary socket 1144 are further held by two O rings 1146. The fourth water supply pipe 1114 is connected to a hose 1150 via the pedestal 1124 and the connector 1148. The hose 1150 is bent along the water discharge pipe 1128. Hot water supplied from the fourth water supply pipe 1114 passes through the hose 1150. An air layer 1152 formed between the water discharge pipe 1128 and the hose 1150 forms a heat insulating layer and thus thermal energy of the hose 1150 is difficult to be transferred to the water discharge pipe 1128. Such a structure suppresses a temperature rise of the water discharge pipe 1128.

The hose 1150 is connected to a fixing member 1156 (functional component) via a connector 1158. The fixing member 1156 is fixed to the water discharge pipe 1128 via a covering member 1160. An outlet of the hose 1150 is closed by a spindle 1154. Rotating the rotary handle 1122 results in movement of the spindle 1154 in a negative y axis direction and opens the outlet of the hose 1150. This results in discharging hot water in the hose 1150 from the water discharge part 1130.

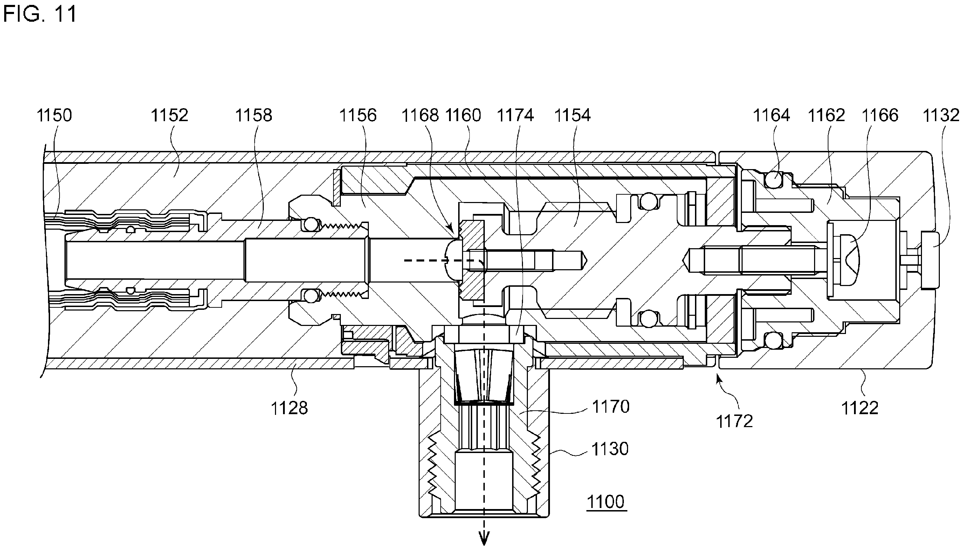

Fig. 11 is an enlarged cross-sectional side view of the water discharge part 1130 and its vicinity in the hot water single faucet 1100 of the second embodiment.

The hose 1150 is connected to the fixing member 1156 via the connector 1158. Hot water flows into the fixing member 1156 from the hose 1150 and thus the fixing member 1156 tends to be also hot. The fixing member 1156 is fitted into the water discharge pipe 1128 via the covering member 1160 made of resin. The covering member 1160 is a heat insulating material that suppresses the heat of the fixing member 1156 to be transferred to the water discharge pipe 1128 and also plays a role to fix the fixing member 1156 to the water discharge pipe 1128.

Inside the rotary handle 1122 a handle main body part 1162 is installed via an O ring 1164. The handle main body part 1162 is connected to the spindle 1154 by a fixing screw 1166. When water is stopped, an outlet 1168 of the hose 1150 is closed by the spindle 1154. Rotating the rotary handle 1122 results in movement of the spindle 1154 in a rightward direction on the paper surface in Fig. 11 and opens the outlet 1168, thereby allowing the hose 1150 and the water discharge part 1130 to be communicated. When the outlet 1168 opens, hot water having flowed into the hose 1150 flows into the water discharge part 1130 via the outlet 1168, passes through a straightener cap 1170 inside the water discharge part 1130, and then is discharged downward on the paper surface in Fig. 11.

A joint part of a main body part (a side of the water discharge pipe 1128) of the hot water single faucet 1100 and the rotary handle 1122 includes a slight groove 1172. When the rotary handle 1122 is rotated and the rotary handle 1122 linearly moves rightward on the paper surface, the width of the groove 1172 is widened. When the groove 1172 is deep, the groove 1172 stands out especially upon discharging water. This is not preferable in appearance. Moreover, when the groove 1172 is wide and deep, steam easily enters from the groove 1172. Steam having entered the rotary handle 1122 or the water discharge pipe 1128 is gradually cooled to become droplets and may drop from the groove 1172 as droplets. As described above, it is desirable that the groove 1172 is as small and especially shallow as possible from the perspectives of appearance and hygiene. Details of a structure to allow the groove 1172 to be shallow will be described later.

As described above, the covering member 1160 is not only a heat insulating material but also plays the role of stabilizing the fixing member 1156 in the water discharge pipe 1128. The rotary handle 1122 and the spindle 1154 connected thereto are inserted in the fixing member 1156 in the second embodiment and thus, when the fixing member 1156 is unstable, the rotary handle 1122 disadvantageously becomes unstable. Methods to further firmly stabilizing the fixing member 1156 by the covering member 1160 include a method to pierce a screw in the covering member 1160 from outside the water discharge pipe 1128 and to thereby fix the covering member 1160 or the fixing member 1156 to the water discharge pipe 1128. In this case, however, the screw is visible from outside the water discharge pipe 1128. This is not preferable in appearance. In order to firmly fix the covering member 1160 and the water discharge pipe 1128, it is required that screws are provided to a plurality of positions.

In the second embodiment, therefore, the fixing member 1156 and the covering member 1160 are fixed to the water discharge pipe 1128 by screwing the straightener cap 1170 into the water discharge part 1130 and allowing the straightener cap 1170 to press the fixing member 1156 and the covering member 1160 against the water discharge pipe 1128 via a packing 1174. The straightener member is a essential component for straightening discharged water. In the second embodiment, the straightener cap 1170 as the straightener member to be inserted in the water discharge part 1130 like a screw also plays a role to stabilize the fixing member 1156 or the covering member 1160.

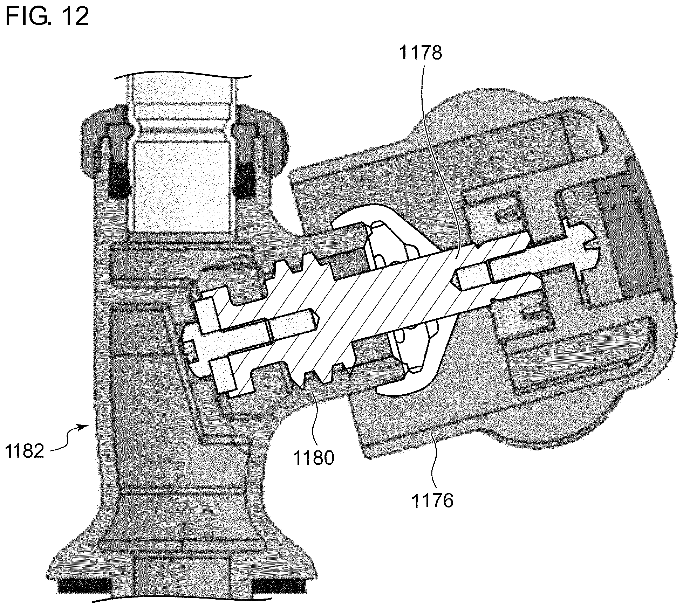

Fig. 12 is a cross-sectional side view of a general rotary handle.

Before explaining the structure for making the groove 1172 shallow in the second embodiment, a gap structure between a general handle and a main body part will be described. Generally, a rotary handle 1176 incorporates a spindle 1178, and in a cylindrical part 1180 protruding from a main body part 1182 of a faucet the spindle 1178 is inserted. The rotary handle 1176 is often formed large in such a manner as to cover the cylindrical part 1180 in order to hide internal structures of the cylindrical part 1180 or the spindle 1178 from outside.

Meanwhile, a large gap is formed between the cylindrical part 1180 and the rotary handle 1176 in the case of the structure illustrated in FIG. 12. Therefore a foreign matter such as dust can easily enter inside the rotary handle 1176 from this gap. In the case of the hot water single faucet 1100 steam may enter and, when this steam is cooled inside the rotary handle 1176, this steam is cooled to become droplets and may drip from the inside of the rotary handle 1176.

In the second embodiment, design of the hot water single faucet 1100 is further sophisticated by reducing the size of this gap (groove 1172) and the perspective of hygiene is also considered by making it difficult for dust or steam to enter inside the hot water single faucet 1100 or the rotary handle 1122.

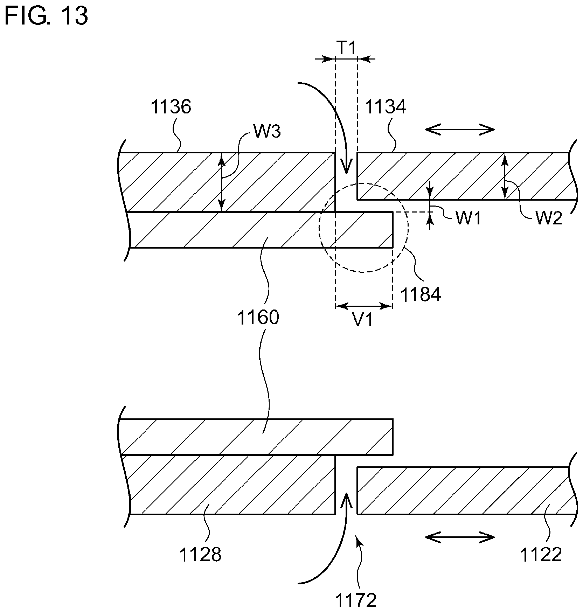

Fig. 13 is an enlarged schematic diagram of the groove 1172 and its vicinity of the second embodiment.

As described related to Fig. 9, an outer surface 1134 of the rotary handle 1122 and an outer surface 1136 of the water discharge pipe 1128 continue in a flat manner. The phrase "in a flat manner" herein means that an outer diameter of the water discharge pipe 1128 and an outer diameter of the rotary handle 1122 are substantially the same or include a shift by at least 3% or less. This flattening allows for implementing integrated simple design in the rotary handle 1122 and the main body part (such as the water discharge pipe 1128) of the hot water single faucet 1100. When the rotary handle 1122 is rotated in an opening direction, the rotary handle 1122 linearly moves rightward on the paper surface in Fig. 13 and the width T1 of the groove 1172 becomes large.

In the second embodiment, the covering member 1160 slightly protrudes from the inner side of the outer surface 1136. This protruding part from the covering member 160 forms the "protruding part 1184". An outer shell of the rotary handle 1122 moves along the protruding part 1184. It is ideal that a width W1 between an inner surface of the rotary handle 1122 and an outer surface of the covering member 1160 equals zero. It is desirable that the width is 0.25 millimeters or less, and at least 0.5 millimeters or less. The phrase "formed along" herein means that the rotary handle 1122 linearly moves outside the protruding part 1184 while the width W1 between the protruding part 1184 and the rotary handle 1122 is substantially maintained.

Even when a width T1 of the groove 1172 increases when the rotary handle 1122 moves, only the protruding part 1184 is visible from the groove 1172. In other words, the protruding part 1184 shields the inside of the hot water single faucet 1100 and thereby making the groove 1172 shallow. For this purpose, it is preferable that the protruding part 1184 shields the inside even when the rotary handle 1122 moves and the width T1 of the groove 1172 reaches the maximum value. It is therefore desirable that the length V1 of the protruding part 1184 is more than or equal to the maximum value of the width T1.

The width W1 is considerably smaller as compared to the thickness W3 of the water discharge pipe 1128 or the thickness W2 of the rotary handle 1122. In order to make the groove 1172 shallow, it is preferable that the thickness W2 of the outer shell of the outer surface 1136 and the thickness W3 of the outer shell of the rotary handle 1122 are also as thin as possible. It is preferable that W1 is formed to be at least one-fourth or less of W2 and W3.

To sum up, the hot water single faucet 1100 in the second embodiment implements simple and integrated design by flattening the outer surface 1134 of the rotary handle 1122 and the outer surface 1136 of the water discharge pipe 1128. When the rotary handle 1122 moves in parallel, however, the width T1 of the groove 1172 becomes larger and the groove 1172 stands out and thus this "integrated appearance" is more or less deteriorated. Especially when the groove 1172 is deep, integrity of design that the rotary handle 1122 and the water discharge pipe 1128 continue in a flat manner is likely to be ruined. To prevent this, it is preferable to make the groove 1172 as shallow as possible. Therefore, the protruding part 1184 is formed by allowing the covering member 1160 to protrude from the inner side of the water discharge pipe 1128 (outer shell) by a predetermined length and (the outer shell of) the rotary handle 1122 is allowed to move along an outer wall of the protruding part 1184. Such a structure makes the groove 1172 as inconspicuous as possible and maintains integrity of the rotary handle 1122 and the water discharge pipe 1128.

Making the groove 1172 shallow and the width W1 very small not only have advantages in the perspective of design but also have advantages in the perspective of hygiene wherein it becomes difficult for a foreign matter such as dust or steam to enter inside from the groove 1172

To further describe, the covering member 1160 plays three roles including a first role of fixing the fixing member 1156 inside the water discharge pipe 1128, a second role of suppressing heat of the fixing member 1156 to be transferred to the water discharge pipe 1128, and a third role of forming the protruding part 1184 and thereby making the groove 1172 shallow. This allows the covering member 1160 to effectively utilize a limited space in a tip portion of the water discharge pipe 1128.

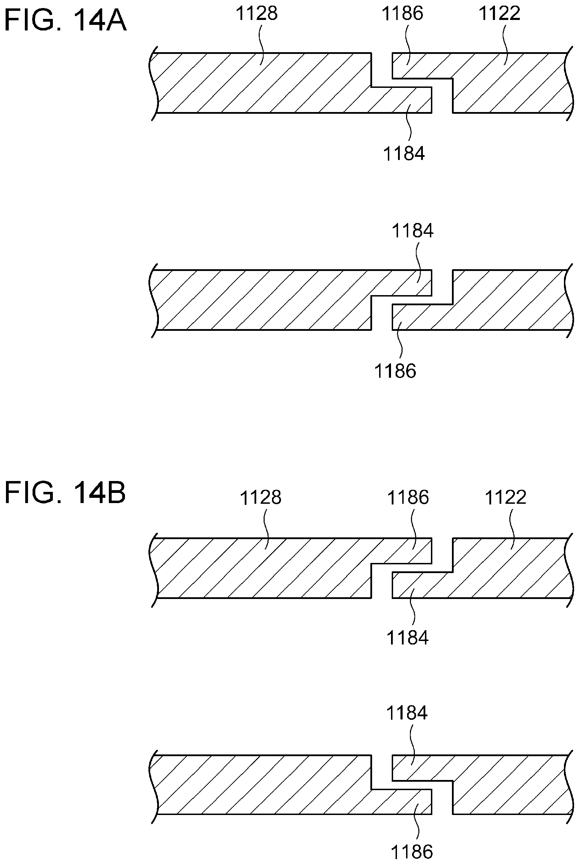

Fig. 14A is a diagram illustrating a variation where a protruding part 1184 is formed at an outer shell of a water discharge pipe 1128 in the second embodiment.

The protruding part 1184 may be formed by a separate member such as the covering member 1160 or may be formed by processing the outer shell of the water discharge pipe 1128. In Fig. 14A, the protruding part 1184 is formed by allowing an inner wall of the water discharge pipe 1128 to protrude and a covering part 1186 for covering the protruding part 1184 is formed by allowing an outer wall of a rotary handle 1122 to protrude.

Fig. 14B is a diagram illustrating a variation where a protruding part 1184 is formed at an outer shell of a rotary handle 1122 in the second embodiment.

In Fig. 14B, the protruding part 1184 is formed by allowing an inner wall of the rotary handle 1122 to protrude and a covering part 1186 for covering the protruding part 1184 is formed by allowing an outer wall of a water discharge pipe 1128 to protrude. In either case, the inside is shielded by the protruding part 1184. Since it is required to process the outer shell of the rotary handle 1122 or the water discharge pipe 1128, difficulty in manufacturing becomes more or less higher as compared to allowing the covering member 1160 to protrude. Meanwhile, there is an advantage that the groove 1172 can be especially shallow since the protruding part 1184 or the covering part 1186 is formed at the water discharge pipe 1128 or a part of the water discharge pipe 1128.

The hot water single faucet 1100 and especially the joint structure of the rotary handle 1122 and the water discharge pipe 1128 have been mainly described based on the second embodiment.

First, the rotary handle 1122 is attached not to the base but to the tip portion of the hot water single faucet 1100. The outer surface 1134 of the rotary handle 1122 and the outer surface 1136 of the water discharge pipe 1128 continue in a flat manner and thus a simple design where the rotary handle 1122 is integrated to the hot water single faucet 1100 in appearance can be implemented.

The groove 1172 is formed at the joint part between the rotary handle 1122 and the hot water single faucet 1100 (faucet main body). When the rotary handle 1122 moves the width T1 of the groove 1172 increases. The depth of the groove 1172 is suppressed to a level equivalent to the thickness W1 of the water discharge pipe 1128 and the thickness W2 of the rotary handle 1122 by allowing the covering member 1160 to protrude from an inner side of the water discharge pipe 1128 by a predetermined length. Making the groove 1172 shallow by the protruding part 1184 facilitates maintaining integrity of appearance between the rotary handle 1122 and the hot water single faucet 1100 and makes it difficult for a foreign matter or steam to enter from the groove 1172. This is meaningful also from the perspective of hygiene.

The hot water single faucet 1100 has been described in the second embodiment; however, the joint structure of the rotary handle 1122 and the rotary handle 1122 in the second embodiment is also applicable to mixing faucets with two handles or to cold water faucets. A position of the handle is not limited to a tip of a faucet and may be near a base of the faucet. The main body part is not limited to the water discharge pipe. The rotary handle is applicable not only to faucets for kitchens but also to faucets for bathrooms or wash cabinets.

### [Third Embodiment]

In a third embodiment, a point which will be mainly described is that a member for passing water incorporated in a faucet (especially a hot water single faucet) is pressed by a straightener cap inserted in a water discharge part and thereby stabilized.

In faucets installed in a kitchen, a water discharge pipe often incorporates various components. For example, a functional component for controlling water discharge or a heat insulating member for suppressing heat conduction from a heating element to a water discharge pipe is also a type of such incorporated components.

In patent document 4, a purified water discharge pipe 21 (hose) is inserted in a mixed water discharge pipe 20 (water discharge pipe). The purified water discharge pipe 21 (hose) is supported near a purified water discharge port 24 (water discharge part) by a supporting pipe body 23 (incorporated component). The supporting pipe body 23 is fixed to the mixed water discharge pipe 20 (water discharge pipe) by a screw 35. Firmly fixing the supporting pipe body 23 to the mixed water discharge pipe 20 (water discharge pipe) by the screw 35 prevents the supporting pipe body 23 or the purified water discharge pipe 21 (hose) from being unstable inside the mixed water discharge pipe 20 (water discharge pipe).

The method of fixing by a screw however requires piercing a hole in the water discharge pipe and thus this is not preferable from the perspective of design. Moreover, when the incorporated component is relatively large, "instability" may not be eliminated by fixing at one point by one screw. Increasing the number of screws deteriorates not only design but also assembling property and thus is especially unpreferable.

In the third embodiment, a structure for stabilizing an incorporated component inside a water discharge pipe is proposed with consideration to design.

An overview of the third embodiment will be described.

A faucet of an embodiment of the present invention includes: a water discharge pipe formed with a water discharge part of a cylindrical shape on a side surface thereof; an incorporated component fixed inside the water discharge pipe; and a supporting member that is inserted in the water discharge part and supports the incorporated component.

The supporting member positions the incorporated component inside the water discharge pipe and is fixed to the water discharge part.

The supporting member is inserted in the water discharge part and thus is unlikely to be visually recognized from outside. Therefore design is unlikely to be deteriorated. The incorporated component is positioned by the supporting member having a certain size and thus the supporting member is likely to firmly support the incorporated component although with a simple structure. For example the incorporated component may be positioned by engaging the supporting member to the incorporated component or another member that fixes the incorporated component (hereinafter referred to as "incorporated component or other components"). Alternatively, the incorporated component may be positioned by fixing the incorporated component or other components and the supporting member by bonding or welding.

The supporting member may be fixed to the water discharge part while pressing the incorporated component against an inner surface of the water discharge pipe. Since the supporting member can press the incorporated component, in other words the incorporated component or other components are fixed by pressure from the supporting member, the incorporated component is likely to be firmly supported by a simple structure.

The supporting member may also function as a straightener member that straightens discharged water.

Allowing the straightener member to function also as the supporting member facilitates effectively utilizing a limited inner space in the water discharge part.

The incorporated component is inserted in the covering member and the supporting member presses the incorporated component against the inner surface of the water discharge pipe via the covering member.

Covering the incorporated component by the covering member facilitates the covering member to function also as a buffer member.

The supporting member may be formed by a material having a heat conductivity lower than that of the water discharge part.

Heat insulating property of the supporting member facilitates suppressing a temperature rise in the water discharge part upon passing of hot water.

The supporting member may further have a cylindrical shape covering substantially the entire inner surface of the water discharge part.

Covering the inner surface of the water discharge part by the supporting member facilitates preventing heat upon passing of hot water from being directly conducted to the water discharge part.

The supporting member may include an engaging part positioned on the water discharge port side of the water discharge part and a non-engaging part positioned on the water discharge pipe side. The engaging part of the supporting member may be engaged with the water discharge part and a heat insulating layer may be formed between the non-engaging part and the inner surface of the water discharge part.

Forming the heat insulating layer between the supporting member and the water discharge part further facilitates suppressing a temperature rise in the water discharge part upon passing of hot water.

According to the above structures, the faucet that facilitates stabilizing the incorporated component inside the water discharge pipe can be proposed with consideration to design.

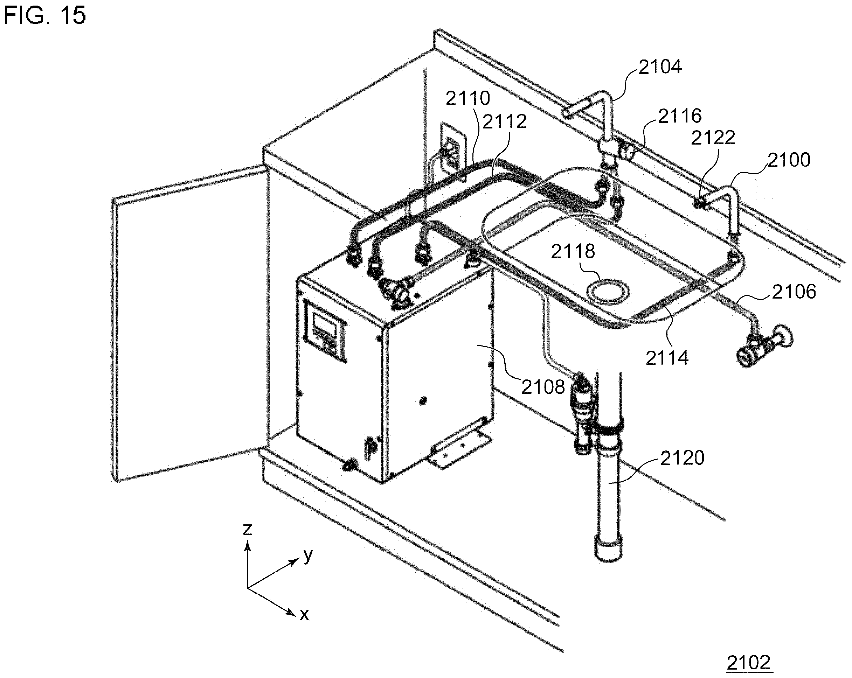

Fig. 15 is a perspective view of a kitchen 2102 installed in an office kitchenette room in the third embodiment.

The kitchen 2102 includes a hot water single faucet 2100 and a mixing faucet 2104. The hot water single faucet 2100 is dedicated to hot water of 95 degrees at the maximum. The mixing faucet 2104 is capable of adjusting the temperature up to approximately 60 degrees at the maximum. The hot water single faucet 2100 is capable of immediately supplying hot water for making tea or coffee.

Water supplied from a first water supply pipe 2106 is once supplied to an electric water heater 2108. The electric water heater 2108 heats the supplied water and produces hot water. A second water supply pipe 2110 of the electric water heater 2108 supplies hot water and a third water supply pipe 2112 supplies cold water to the mixing faucet 2104. Operating a lever handle 2116 attached to a base of the mixing faucet 2104 allows for adjusting the amount of water discharge and the temperature (mixture ratio of hot water and cold water). Water discharged from the mixing faucet 2104 is drained from a drainage pipe 2120 via a drainage port 2118.

Meanwhile, a fourth water supply pipe 2114 of the electric water heater 2108 supplies hot water to the hot water single faucet 2100. Operating the rotary handle 2122 attached to a tip of the hot water single faucet 2100 allows for adjusting the amount of water discharge. The hot water single faucet 2100 is not capable of adjusting the temperature of discharged water. Hot water discharged from the hot water single faucet 2100 is also drained from the drainage pipe 2120 via the drainage port 2118.

Hereinafter, an inner structure of the hot water single faucet 2100 will be mainly described in the third embodiment.

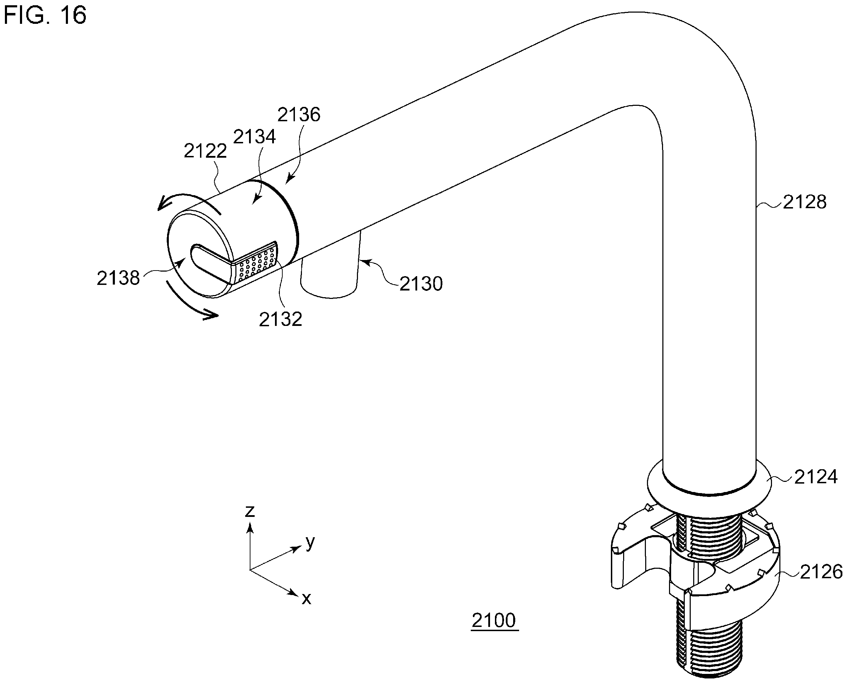

Fig. 16 is a perspective view of appearance of the hot water single faucet 2100 of the third embodiment.

The hot water single faucet 2100 is fixed to the kitchen 2102 by a pedestal 2124 and a washer 2126. A water discharge pipe 2128 is rotatable in the pedestal 2124 about a z axis, which is an axis of rotation, by approximately 150 degrees. In the water discharge pipe 2128, a hose (described later) not illustrated is inserted. This hose is connected to the fourth water supply pipe 2114 via the pedestal 2124 and a connector 2148 (not illustrated in Fig. 16) (described later). A space between the hose and the water discharge pipe 2128 forms a heat insulating layer and thus thermal energy of hot water passing through the hose is difficult to be transferred to the water discharge pipe 2128. Details will be described later.

The water discharge pipe 2128 extends in the z axis direction (vertical direction) and thereafter is bent in a y axis direction to form an L-letter shape. A water discharge part 2130 is formed on a side surface of a tip thereof. To the tip of the water discharge pipe 2128,the rotary handle 2122 is attached. Since the rotary handle 2122 is installed not to the base side of the water discharge pipe 2128 but to the tip side thereof, an operator can operate the hot water single faucet 2100 positioned closer to the body than the water discharge part 2130 without reaching a hand closer to the pedestal 2124. This allows for a safe structure where hot water discharged from the water discharge part 2130 or its splashes or steam is unlikely to strike the hand.

An outer surface 2134 of the rotary handle 2122 and the outer surface 2134 of the water discharge pipe 2128 continue in a flat manner (flush). Therefore, the rotary handle 2122 has a simple design where the water discharge pipe 2128 is integrated.

An operator places a finger to the grip member 2132 attached to the rotary handle 2122 and rotates the rotary handle 2122 about the y axis. The grip member 2132 is an L-letter shaped member that extends in a line shape on the outer surface 2134 of the rotary handle 2122 and is also formed at a part of the upper end surface 2138. As illustrated in Fig. 16, when the grip member 2132 is in a horizontal position, water is stopped. Rotating the rotary handle 2122 therefrom initiates water discharge and gradually increases a flow rate. Rotating by approximately 90 degrees to place the grip member 2132 in a vertical position results in a state where water is fully discharged.

It is preferable that the color of the water discharge pipe 2128 and the rotary handle 2122 is the same or similar. In the third embodiment, the water discharge pipe 2128 and the rotary handle 2122 are formed of metal such as brass or zinc. Meanwhile the grip member 2132 is a red resin member where a plurality of protrusions are arrayed on a surface thereof and forms an "operation surface". Note that the operation surface may be formed not by a separate body such as the grip member 2132 but by processing a part of the outer surface 2134.

A most distinct difference between the outer surface 2134 of the rotary handle 2122 and the operation surface (grip member 2132) formed on the outer surface 2134 is a difference in difficulty of being slipped (coefficient of friction). In the third embodiment, the coefficient of friction of the grip member 2132 is raised by arraying the plurality of protrusions on the surface of the grip member 2132. An operator can intuitively recognize a place to be operated in the rotary handle 2122, that is, a place or a range of the operation surface from the touch and the vision. Therefore, the operator can intuitively understand that there is no need to intensely grasp the entire rotary handle 2122 and that the rotary handle 2122 can be operated by softly placing a finger to and thereby holding the grip member 2132. In this manner, forming the operation surface that is easy to be recognized by the touch, preferably also by the vision, along the outer surface 2134 allows for naturally guiding a finger of the operator to the operation surface.

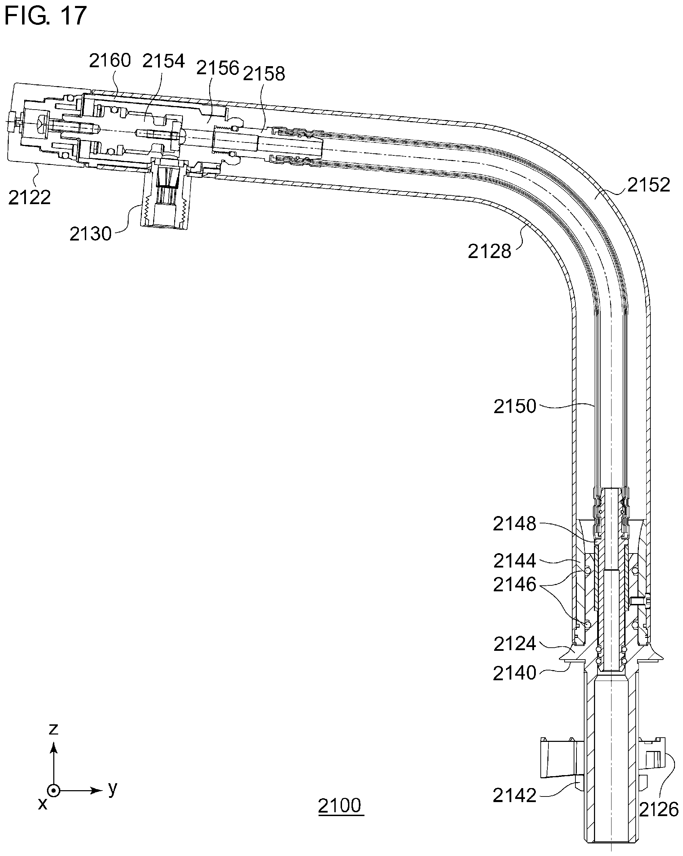

Fig. 17 is a cross-sectional side view of the hot water single faucet 2100 of the third embodiment.

The pedestal 2124 of the hot water single faucet 2100 is inserted in an installing surface of the kitchen 2102 via a packing 2140 and is fixed by the washer 2126 and a fastening nut 2142. An upper part of the pedestal 2124 is inserted in a rotary socket 2144. The pedestal 2124 and the rotary socket 2144 are further held by two O rings 2146. The fourth water supply pipe 2114 is connected to a hose 2150 via the pedestal 2124 and the connector 2148. The hose 2150 is bent along the water discharge pipe 2128. Hot water supplied from the fourth water supply pipe 2114 passes through the hose 2150. An air layer 2152 formed between the water discharge pipe 2128 and the hose 2150 forms a heat insulating layer and thus thermal energy of the hose 2150 is difficult to be transferred to the water discharge pipe 2128. Such a structure suppresses a temperature rise of the water discharge pipe 2128.

The hose 2150 is connected to a fixing member 2156 (a type of incorporated components) via a connector 2158. The fixing member 2156 is fixed to the water discharge pipe 2128 via a covering member 2160. An outlet of the hose 2150 is closed by a spindle 2154. Rotating the rotary handle 2122 results in movement of the spindle 2154 in a negative y axis direction and opens the outlet of the hose 2150. This results in discharging hot water in the hose 2150 from the water discharge part 2130.

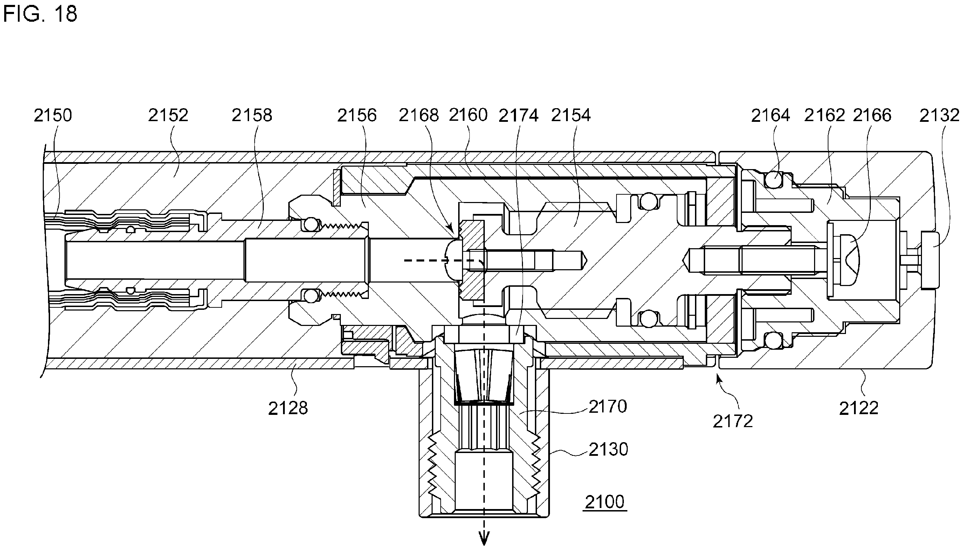

Fig. 18 is an enlarged cross-sectional side view of the water discharge part 2130 and its vicinity in the hot water single faucet 2100 of the third embodiment.

The hose 2150 is connected to the fixing member 2156 via the connector 2158. Hot water flows into the fixing member 2156 from the hose 2150 and thus the fixing member 2156 tends to be also hot. The fixing member 2156 is fitted into the water discharge pipe 2128 via the covering member 2160 made of resin. The covering member 2160 is a heat insulating material that suppresses the heat of the fixing member 2156 to be transferred to the water discharge pipe 2128 and also plays a role to fix the fixing member 2156 to the water discharge pipe 2128.

Inside the rotary handle 2122 a handle main body part 2162 is installed via an O ring 2164. The handle main body part 2162 is connected to the spindle 2154 by a fixing screw 2166. When water is stopped, an outlet 2168 of the hose 2150 is closed by the spindle 2154. Rotating the rotary handle 2122 results in movement of the spindle 2154 in a rightward direction on the paper surface in Fig. 18 and opens the outlet 2168, thereby allowing the hose 2150 and the water discharge part 2130 to be communicated. When the outlet 2168 opens, hot water having flowed into the hose 2150 flows into the water discharge part 2130 via the outlet 2168, passes through a straightener cap 2170 inside the water discharge part 2130, and then is discharged downward on the paper surface in Fig. 18.

A joint part of the water discharge pipe 2128 and the rotary handle 2122 includes a slight groove 2172. When the rotary handle 2122 is rotated and the rotary handle 2122 parallely moves, the width of the groove 2172 is widened. When the groove 2172 is deep, the groove 2172 stands out especially upon discharging water. This is not preferable in appearance. Moreover, when the groove 2172 is wide and deep, steam easily enters from the groove 2172. Steam having entered the rotary handle 2122 or the water discharge pipe 2128 is gradually cooled to become droplets and may drop from the groove 2172 as droplets. As described above, it is desirable that the groove 2172 is as small and especially shallow as possible from the perspectives of appearance and hygiene.

In the third embodiment, therefore, the covering member 2160 slightly protrudes from the water discharge pipe 2128. An outer surface of this protruding covering member 2160 matches an inner surface of the rotary handle 2122. It is ideal that a gap between the covering member 2160 and the rotary handle 2122 equals zero. It is preferable that the space is at least 0.5 millimeters or less, and more preferably 0.25 millimeters or less in the structure. In this manner, the groove 2172 in the joint part of the water discharge pipe 2128 and the rotary handle 2122 is allowed to be shallow by allowing the covering member 2160 to slightly protrude from the water discharge pipe 2128 and allowing the inner surface of the rotary handle 2122 to match the outer surface of the protruding part of the covering member 2160.

As described above, the covering member 2160 is not only a heat insulating material but also plays the role of stabilizing the fixing member 2156 in the water discharge pipe 2128. The rotary handle 2122 and the spindle 2154 connected thereto are inserted in the fixing member 2156 in the third embodiment and thus, when the fixing member 2156 is unstable, the rotary handle 2122 disadvantageously becomes unstable. Methods to further firmly stabilizing the fixing member 2156 by the covering member 2160 include a method to pierce a screw in the covering member 2160 from outside the water discharge pipe 2128 and to thereby fix the covering member 2160 or the fixing member 2156 to the water discharge pipe 2128. In this case, however, the screw is visible from outside the water discharge pipe 2128. This is not preferable in appearance. In order to firmly fix the covering member 2160 and the water discharge pipe 2128, it is required that screws are provided to a plurality of positions.

In the third embodiment, therefore, the fixing member 2156 and the covering member 2160 are fixed to the water discharge pipe 2128 by screwing the straightener cap 2170 into the water discharge part 2130 and allowing the straightener cap 2170 to press the fixing member 2156 and the covering member 2160 against the water discharge pipe 2128 via a packing 2174. The straightener member is a essential component for straightening discharged water. In the third embodiment, the straightener cap 2170 as the straightener member to be inserted in the water discharge part 2130 like a screw also plays a role to stabilize the fixing member 2156 or the covering member 2160.

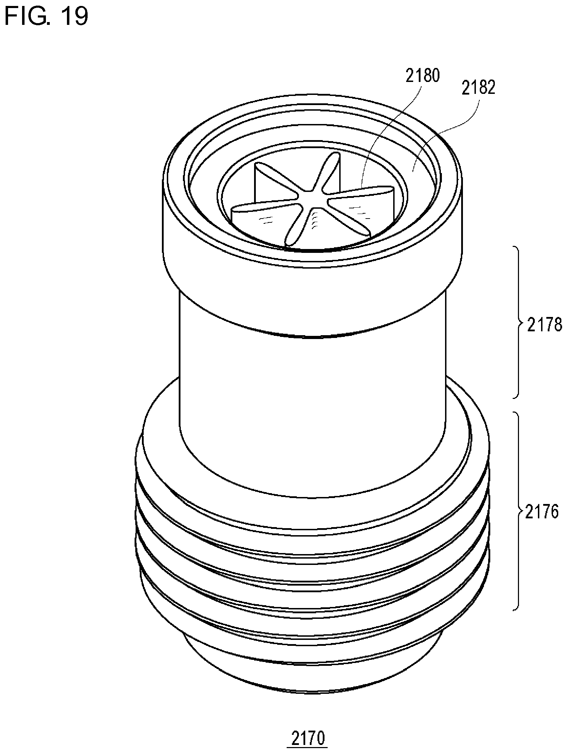

Fig. 19 is a perspective view of appearance of the straightener cap 2170 of the third embodiment.

The water discharge part 2130 has a cylindrical shape and the straightener cap 2170 (supporting member) inserted in the water discharge part 2130 likewise has a cylindrical shape. A straightener plate 2180 inside the straightener cap 2170 straightens water flow. The straightener cap 2170 includes an engaging part 2176 to which a screw groove is threaded and a non-engaging part 2178 without a screw groove. An outer diameter of the non-engaging part 2178 is smaller than an outer diameter of the engaging part 2176. Engagement of the engaging part 2176 to a screw groove threaded on the inner surface of the water discharge part 2130 results in fixing the straightener cap 2170 to the water discharge part 2130. An abutting surface 2182 of a ring shape in an upper part of the straightener cap 2170 abuts against the fixing member 2156 via the packing 2174.

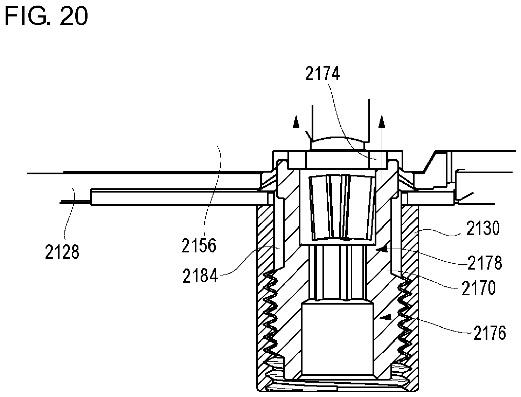

Fig. 20 is an enlarged cross-sectional side view of the water discharge part 2130 of the third embodiment.

In a manufacturing process of the hot water single faucet 2100, the straightener cap 2170 is inserted from the water discharge port side of the water discharge part 2130. The engaging part 2176 of the straightener cap 2170 is engaged to the screw groove on the inner wall of the water discharge part 2130. The straightener cap 2170 pushes the fixing member 2156 upward on the paper surface via the packing 2174. The fixing member 2156 is pressed against an upper surface of the water discharge pipe 2128 via the covering member 2160 (see also Fig. 18). The fixing member 2156 is stabilized inside the water discharge pipe 2128 by pressing the fixing member 2156 from below by the straightener cap 2170, in other words by interposing the fixing member 2156 by (the upper surface of) the water discharge pipe 2128 and the straightener cap 2170.

This is a method to insert the straightener cap 2170 from the water discharge part 2130 and thus there is no need to pierce a screw hole in the water discharge pipe 2128. The straightener cap 2170 is hidden in the water discharge part 2130 and thus the straightener cap 2170 does not deteriorate design. Moreover, as illustrated in Fig. 19, the fixing member 2156 is pressed by the relatively large abutting surface 2182 of the straightener cap 2170. This facilitates stabilizing the fixing member 2156 better than a method of fixing at one point by a screw.

The water discharge part 2130 is fixed to the water discharge pipe 2128 by welding and the straightener cap 2170 is firmly engaged with the water discharge part 2130. Therefore, strongly pushing the straightener cap 2170 allows for firmly fixing the fixing member 2156.

The straightener cap 2170 functions as the supporting member as well as the straightener member. In other words, the single component can play two functions and thus a limited space in the water discharge part 2130 can be effectively utilized.

The covering member 2160 fixes the fixing member 2156 to the water discharge pipe 2128 and is a heat insulating member that suppresses heat conduction from the fixing member 2156 to the water discharge pipe 2128. The covering member 2160 also functions as a buffer member when the fixing member 2156 is pressed against (the upper surface of) the water discharge pipe 2128.

The straightener cap 2170 passes hot water and thus is likely to be relatively hot. When heat of the straightener cap 2170 is conducted to the water discharge part 2130 and also to the water discharge pipe 2128, both of the water discharge part 2130 and the water discharge pipe 2128 become hot. A temperature rise in an exposed part such as the water discharge part 2130 is not preferable from the perspective of safety. Therefore, forming the straightener cap 2170 by a material having a low heat conductivity such as resin allows for suppressing heat conduction to the water discharge part 2130.

An outer surface of the straightener cap 2170 entirely covers the inner surface of the water discharge part 2130 as illustrated in FIG. 20. This is to avoid hot water passing inside the straightener cap 2170 from directly touching the water discharge part 2130. Specifically, it is preferable that 95% or more or at least 85% or more of an area of the inner surface of the water discharge part 2130 is covered by the outer surface of the straightener cap 2170.

The straightener cap 2170 of the third embodiment further includes the non-engaging part 2178 having an outer diameter smaller than that of the engaging part 2176. Therefore a gap 2184 is created between the non-engaging part 2178 and the water discharge part 2130. The gap 2184 forms the heat insulating layer, thereby further suppressing heat conduction to the water discharge part 2130. In this manner, the straightener cap 2170 functions not only as the fixing member and the straightener member but also as a heat insulating member.

The hot water single faucet 2100 and especially the structure to fix the fixing member 2156 inside the water discharge pipe 2128 by the straightener cap 2170 has been mainly described based on the third embodiment.

First, the rotary handle 2122 is attached not to the base but to the tip portion of the hot water single faucet 2100. The outer surface 2134 of the rotary handle 2122 and the outer surface 2136 of the water discharge pipe 2128 continue in a flat manner and thus a simple design where the rotary handle 2122 is integrated to the hot water single faucet 2100 in appearance can be implemented.

In the case of the third embodiment, the rotary handle 2122 and the spindle 2154 connected thereto are inserted in the fixing member 2156 and thus, when the fixing member 2156 is unstable, the rotary handle 2122 is also likely to be unstable. The fixing member 2156 can be fixed to some extent by the covering member 2160; however, the straightener cap 2170 is used as a supporting member for more reliable fixing. The straightener cap 2170 is inserted inside the water discharge part 2130 and thus is not visually recognized from the outside. Therefore, the fixing member 2156 can be stabilized without deteriorating design. The straightener cap 2170 can be attached only by inserting in the water discharge part 2130 in a rotating manner and thus assembling is easy.

This is a structure where the straightener cap 2170 that is originally to be provided to the water discharge part 2130 also plays functions as the supporting member and the heat insulating member, a limited space in the hot water single faucet 2100 can be effectively utilized.

The hot water single faucet 2100 has been described in the third embodiment; however, the supporting structure of the incorporated component in the third embodiment is also applicable to mixing faucets or cold water faucets. The water discharge pipe and the water discharge part has been described as having a cylindrical shape; however, a cross-section thereof may be another shape such as an ellipse or a rectangular. The above is applicable not only to faucets for kitchens but also to faucets for bathrooms or wash cabinets.

The present invention has been described above based on some embodiments. These embodiments are merely illustration. Therefore, it should be understood by a person skilled in the art that various variations and modifications are possible within the scope of the claims and that those variations and modifications are also within the scope of the claims of the present invention. The descriptions and drawings herein are therefore to be regarded not in a limiting sense but in an illustrative sense.

### [Industrial Applicability]

The present invention is applicable to a rotary handle attached to a faucet and a water discharge pipe.

## Claims

1. A rotary handle that is attached to a faucet main body and controls water discharge, wherein
the rotary handle is provided on a front end side of the faucet main body with respect to a water discharge part provided on the faucet main body, and rotates about an axis of a faucet main body to which the handle is attached.

2. The rotary handle according to claim 1, comprising:
an operation part having a coefficient of friction greater than that of other regions, the operation part being included at least in a part of an outer surface.

3. The rotary handle according to claim 2, wherein the operation part is provided within an area not reaching a joint position of the rotary handle and the faucet main body on the outer surface of the rotary handle.

4. The rotary handle according to claim 2 or 3, wherein the operation part is formed as a line-shaped surface extending along the outer surface in a direction of an axis of rotation.

5. The rotary handle according to any one of claims 2 to 4, wherein:
the operation part is formed in an operation member assembled onto the rotary handle; and
the operation member extends to an upper end surface of the rotary handle.

6. The rotary handle according to any one of claims 2 to 5, wherein the operation part has an array of a plurality of protrusions, such as to have the coefficient of friction greater than that in other regions.

7. A faucet, comprising:
a faucet main body provided with the water discharge part on a side surface thereof; and
the rotary handle according to any one of claims 1 to 6, the rotary handle being attached to a front end surface of the faucet main body.

8. The faucet according to claim 7, wherein:
at a j oint part of the faucet main body and the rotary handle, an inner side of an outer shell of one of the faucet main body and the rotary handle is provided with a protruding part protruding by a predetermined length from the outer shell; and
an outer shell of the other one of the faucet main body and the rotary handle is formed along an outer surface of the protruding part.

9. The faucet according to claim 8, wherein, at the joint part, outer surfaces of the faucet main body and the rotary handle continue in a flat manner.

10. The faucet according to claim 8 or 9, wherein:
the faucet main body comprises a functional component for controlling water discharge and a covering member that covers the functional component; and
the covering member protrudes by a predetermined length from the inner side of the outer shell of the faucet main body and thereby forms the protruding part.

11. The faucet according to claim 10, wherein the covering member fixes the functional component to the faucet main body and functions as a heat insulating member interposed between the functional component and the faucet main body.

12. The faucet according to any one of claims 8 to 11, wherein the predetermined length of the protruding part is larger than a maximum width of a groove formed between the faucet main body and the rotary handle.

13. The faucet according to claim 7, wherein:
the water discharge part is formed into a cylindrical shape, the faucet further comprises:
a functional component fixed inside the faucet main body; and
a supporting member inserted in the water discharge part and supporting the functional component, and
the functional component is positioned inside the faucet main body by the supporting member being fixed to the water discharge part.

14. The faucet according to claim 13, wherein the supporting member is fixed to the water discharge part while pressing the functional component against an inner surface of the faucet main body.

15. The faucet according to claim 13 or 14, wherein the supporting member also functions as a straightener member that straightens discharged water.

16. The faucet according to any one of claims 13 to 15, wherein:
the functional component is inserted in a covering member; and
the supporting member presses the functional component against the inner surface of the faucet main body via the covering member.

17. The faucet according to any one of claims 13 to 16, wherein the supporting member is formed by a material having a heat conductivity lower than that of the water discharge part.

18. The faucet according to claim 17, wherein the supporting member has a cylindrical shape covering substantially an entire inner surface of the water discharge part.

19. The faucet according to any one of claims 13 to 18, wherein:
the supporting member comprises an engaging part positioned on a water discharge port side of the water discharge part and a non-engaging part positioned on the faucet main body side;
the engaging part of the supporting member is engaged with the water discharge part; and
a heat insulating layer is formed between the non-engaging part and the inner surface of the water discharge part.
